# EUROPEAN PATENT APPLICATION

(11) **EP 4 596 078 A1**
(43) Date of publication of application: **06.08.2025**
(21) Application number: 24223676.8
(22) Date of filing: 30.12.2024
(51) Int. Cl.: B01D 29/11, B01D 29/90, B01D 29/92

(54) **CHANNEL-SEPARATING STRUCTURE AND METHOD FOR MANUFACTURING A CHANNEL-SEPARATING STRUCTURE**

(30) Priority: 05.11.2024 TW 113142301
(71) Applicant: Caware Filtering Corporation, Kaohsiung City (TW)
(72) Inventor: CHANG, Min-Hua, Kaohsiung City (TW)
(74) Representative: Savi, Massimiliano

(57) **Abstract**

A channel-separating structure comprises a top cap portion (10), comprising a cooperating tube (11), and a channel-separating portion (20). The channel-separating portion (20) comprises a central tube (21) and a connecting seat (23). The central tube (21) is mounted through the cooperating tube (11) and comprises a central channel (211). A peripheral channel (24) is located between the central tube (21) and the cooperating tube (11). The connecting seat (23) abuts and connects a connecting section (112) of the cooperating tube (11). A method for manufacturing a channel-separating structure comprises: inserting a channel-separating element (50) into a top cap (40), and welding to connect the top cap (40) and the channel-separating element (50) to manufacture the channel-separating structure which is assembled to a filter core. The central channel (211) and the peripheral channel (24) provide filtration routes.

## Description

### 1. Field of the Invention

The present invention relates to a channel-separating structure and a method for manufacturing a channel-separating structure, especially to a channel-separating structure mounted on a top portion of a filter core of a water filter device to separate water channels in the water filter device.

### 2. Description of Related Art

A water filter device is for filtrating water and comprises a filter core and a channel-separating structure. The channel-separating structure is mounted on top of the filter core and can separate water channels in the water filter device.

In addition, considering material differences of the filter core, the water filter device has two types of filtration channel designs, including outer-inlet-middle-outlet and middle-inlet-outer-outlet. Furthermore, a housing of the filter core has various forms. Therefore, the water filter device has various shapes and the channel-separating structure also has various shapes.

To be specific, the channel-separating structure comprises an assembling portion, configured to be assembled to the filter core, and a separating portion configured to separate the filtrating channels. The assembling portion has various shapes to match with the housing of the filter core's form. The separating portion also has various forms to accomplish different types of filtration channel designs.

However, the channel-separating structure nowadays is one-pieced formed. That is, the channel-separating structure of each different form of water filter devices needs to be manufactured with a specific mold, which increases costs in both mold-making and storage, and therefore needs to be improved.

The main objective of the present invention is to provide a channel-separating structure and a method for manufacturing a channel-separating structure to resolve a drawback that a channel-separating structure nowadays is one-pieced formed, and so has a higher cost.

The channel-separating structure in accordance with the present invention is configured to be mounted on a top portion of a filter core. The channel-separating structure comprises a top cap portion and a channel-separating portion. The top cap portion comprises a cooperating tube and an assembling wall. The cooperating tube comprises a cooperating hole and a connecting section. The cooperating hole is disposed inside the cooperating tube and is formed through the top cap portion from top to bottom. The connecting section is disposed at a bottom portion of the cooperating tube. The assembling wall is annular, is connected to the cooperating tube, and is disposed at a bottom side of the top cap portion. The channel-separating structure is mounted to the filter core through the assembling wall. The channel-separating portion is disposed inside the cooperating hole of the cooperating tube. The channel-separating portion comprises a central tube, multiple ribs and a connecting seat. The central tube is mounted through the cooperating hole of the cooperating tube and comprises a central channel disposed inside the central tube. The multiple ribs are disposed at an outer side of the central tube and are connected to the connecting seat. A gap is located between an external edge of each one of the multiple ribs and an inner wall surrounding the cooperating hole. The connecting seat is mounted at the outer side of the central tube, and abuts and is connected to the connecting section of the cooperating tube. The connecting seat comprises multiple through holes formed through the connecting seat from top to bottom. A peripheral channel is formed between the central tube and the cooperating tube and fluidly communicates with the multiple through holes.

The assembling wall of the top cap portion of the channel-separating structure is mounted at the top portion of the filter core. The channel-separating structure has the central channel and the peripheral channel, which can provide different filtrating routes according to a type of the filter core.

The method for manufacturing a channel-separating structure in accordance with the present invention comprises the following steps:
providing a top cap comprising
   a cooperating tube comprising
      a cooperating hole disposed inside the cooperating tube and formed through the top cap from top to bottom;
      a connecting section disposed at a bottom portion of the cooperating tube;
   an assembling wall connected to the cooperating tube, being annular, and disposed at a bottom side of the top cap;
providing a channel-separating element comprising
   a central tube comprising
      a central channel inside the central tube;
   a connecting seat comprising
      multiple through holes formed through the connecting seat from top to bottom;
   multiple ribs disposed at an outer side of the central tube and connected to the connecting seat;
inserting the channel-separating element into the cooperating tube of the top cap; abutting the connecting seat against the connecting section of the cooperating tube; forming a gap between an external edge of each one of the multiple ribs and an inner wall surrounding the cooperating hole; and
welding the connecting section of the top cap and the connecting seat of the channel-separating element, such that the connecting section and the connecting seat are welded and bonded to connect the top cap and the channel-separating element.

In the method for manufacturing a channel-separating structure, the top cap and the channel-separating element are produced respectively before connected to each other through welding to manufacture the channel-separating structure. Therefore, the top cap of the channel-separating structure can be produced according to a shape of a housing of a filter core to which the top cap is going to be assembled. The channel-separating element of the channel-separating structure can be produced according to filtrating routes that materials of the filter core require. Then, the top cap and the channel-separating element are welded to be connected to each other. Hence, manufacture of the channel-separating structure does not need to consider the filtrating routes and the shape of the housing of the filter core at the same time, thereby lowering manufacturing complexity and cutting costs.

### IN THE DRAWINGS

Fig. 1 is a perspective view of a first embodiment of a channel-separating structure in accordance with the present invention, mounted at a filter core;
Fig. 2 is a front view of the first embodiment of the channel-separating structure in accordance with the present invention, mounted at the filter core;
Fig. 3 is a front sectional view of the first embodiment of the channel-separating structure in accordance with the present invention;
Fig. 4 is an enlarged front sectional view of an area A in Fig. 3;
Fig. 5 is a perspective view of a second embodiment of the channel-separating structure in accordance with the present invention, mounted at another filter core;
Fig. 6 is a front view of the second embodiment of the channel-separating structure in accordance with the present invention, mounted at the filter core in Fig. 5;
Fig. 7 is a front sectional view of the second embodiment of the channel-separating structure in accordance with the present invention;
Fig. 8 is an exploded view of a top cap and a channel-separating element of the first embodiment of the channel-separating structure in accordance with the present invention, before welding;
Fig. 9 is a sectional perspective view of the channel-separating element in Fig. 8;
Fig. 10 is an exploded view of the top cap and the channel-separating element of the second embodiment of the channel-separating structure in accordance with the present invention, before welding;
Fig. 11 is a sectional perspective view of the channel-separating element in Fig. 10;
Fig. 12 is a front sectional view of the top cap and the channel-separating element in Fig. 8, after assembling and before welding; and
Fig. 13 is an enlarged front sectional view of an area B in Fig. 12.

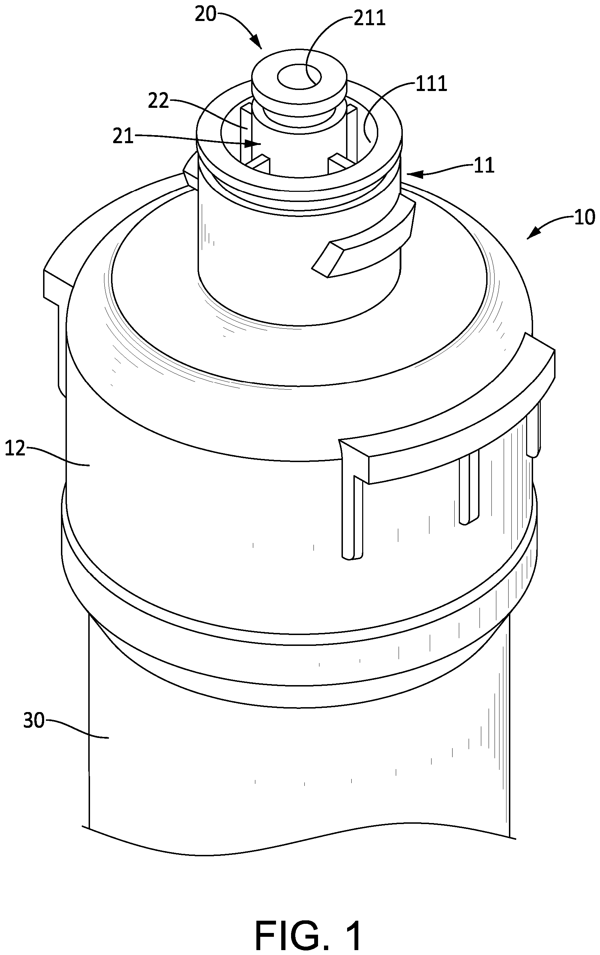

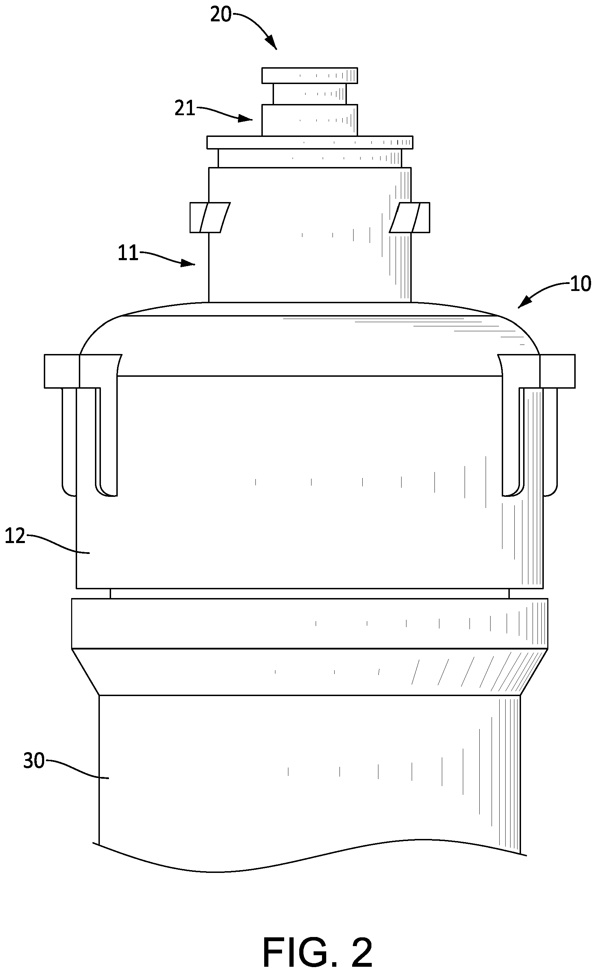

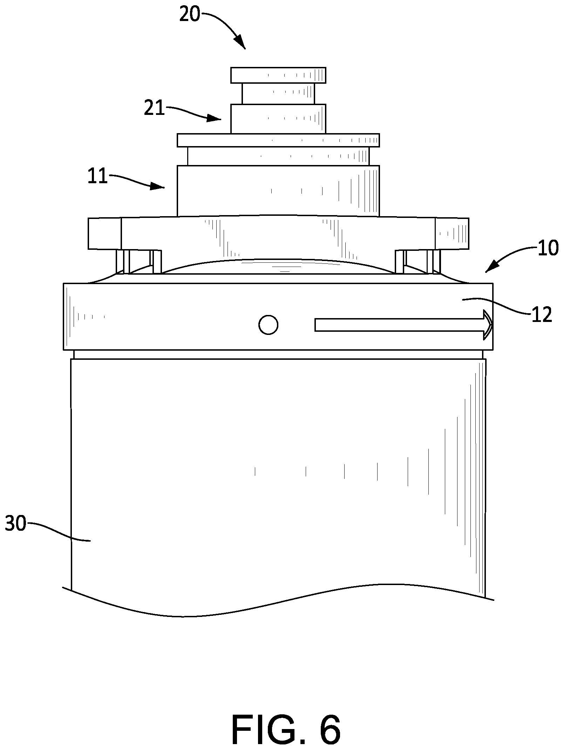

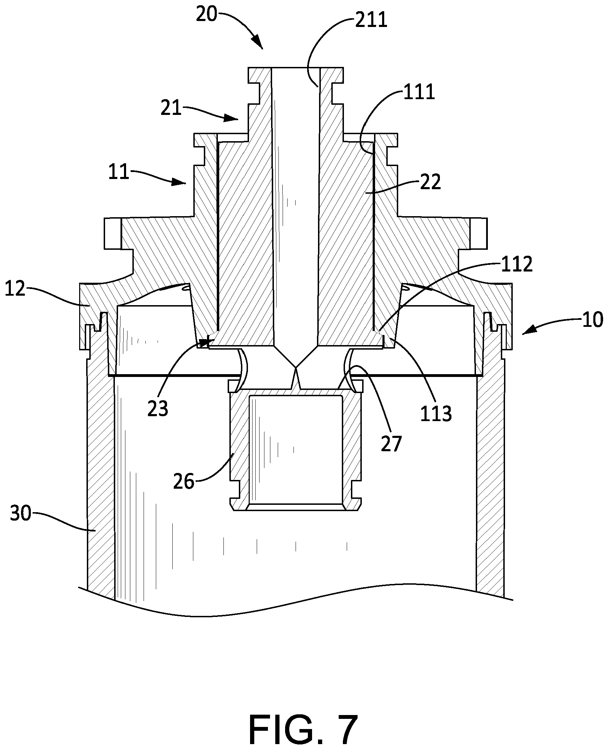

With reference to Figs. 1 to 3 and 5 to 7, multiple embodiments of a channel-separating structure in accordance with the present invention is configured to be mounted on a top portion of a filter core 30. The channel-separating structure comprises a top cap portion 10 and a channel-separating portion 20.

As shown in Figs. 1 to 3, the top cap portion 10 comprises a cooperating tube 11 and an assembling wall 12. The cooperating tube 11 comprises a cooperating hole 111 and a connecting section 112. The cooperating hole 111 is formed and located inside the cooperating tube 11, and is formed through the top cap portion 10 from top to bottom. The connecting section 112 is disposed at a bottom portion of the cooperating tube 11. The assembling wall 12 is connected to the cooperating tube 11, is annular, and is disposed at a bottom side of the top cap portion 10. The channel-separating structure is assembled to the filter core 30 through the assembling wall 12.

As shown in Figs. 1 to 4, the channel-separating portion 20 is disposed inside the cooperating hole 111 of the cooperating tube 11. The channel-separating portion 20 comprises a central tube 21, multiple ribs 22, and a connecting seat 23. The central tube 21 is mounted through the cooperating hole 111 of the cooperating tube 11. The central tube 21 comprises a central channel 211 disposed inside the central tube 11. The multiple ribs 22 are disposed at an outer side of the central tube 21 and are connected to the connecting seat 23. A gap is formed and located between an external edge of each one of the multiple ribs 22 and an inner wall surrounding the cooperating hole 111. The connecting seat 23 is mounted at the outer side of the central tube 21, and abuts and is connected to the connecting section 112 of the cooperating tube 11. The connecting seat 23 comprises multiple through holes 231 formed through the connecting seat 23 from top to bottom. A peripheral channel 24 is formed between the central tube 21 and the cooperating tube 11, and fluidly communicates with the multiple through holes 231.

The assembling wall 12 of the top cap portion 10 of the channel-separating structure is assembled to the top portion of the filter core 30. The channel-separating structure has the central channel 211 and the peripheral channel 24. The central channel 211 and the peripheral channel 24 can provide different filtrating routes according to a type of the filter core 30.

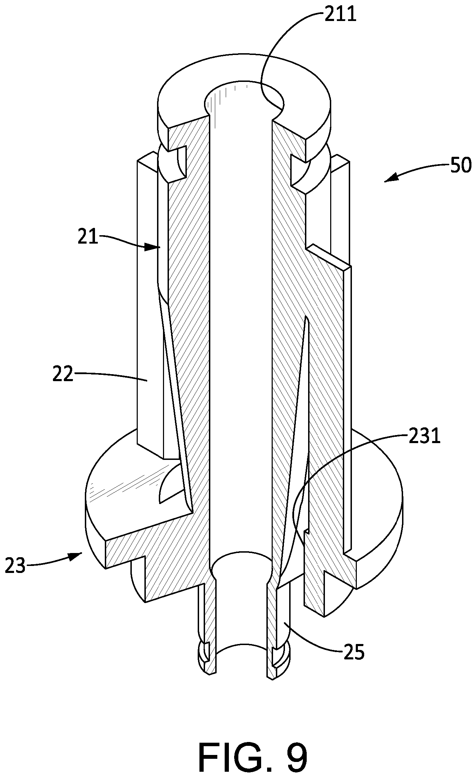

For example, as shown in Figs. 1 to 3 and 9, in the first embodiment of the channel-separating structure, the channel-separating portion 20 comprises an extending tube 25 connected to a bottom portion of the central tube 21 and passes through the connecting seat 23. An inner side of the extending tube 25 fluidly communicates with an inner side of the central tube 21. The peripheral channel 24 passes through an outer side of the extending tube 25. In this embodiment, to-be-filtrated water enters the central tube 21 of the channel-separating portion 20 and the extending tube 25 to pass through the central channel 211 and to be fed into the filter core 30. Water filtrated by the filter core 30 passes through the multiple through holes 231 of the connecting seat 23 to flow and pass between the central tube 21 and the cooperating tube 11, thereby discharged from the channel-separating structure through the peripheral channel 24.

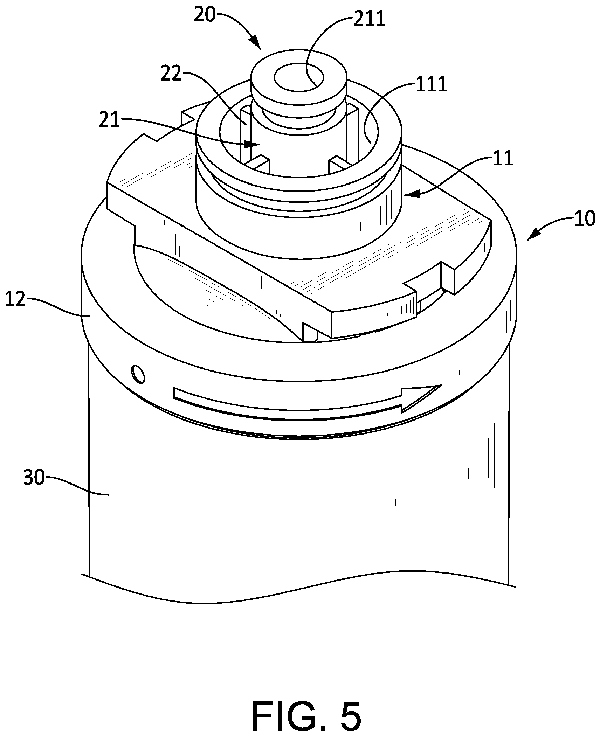

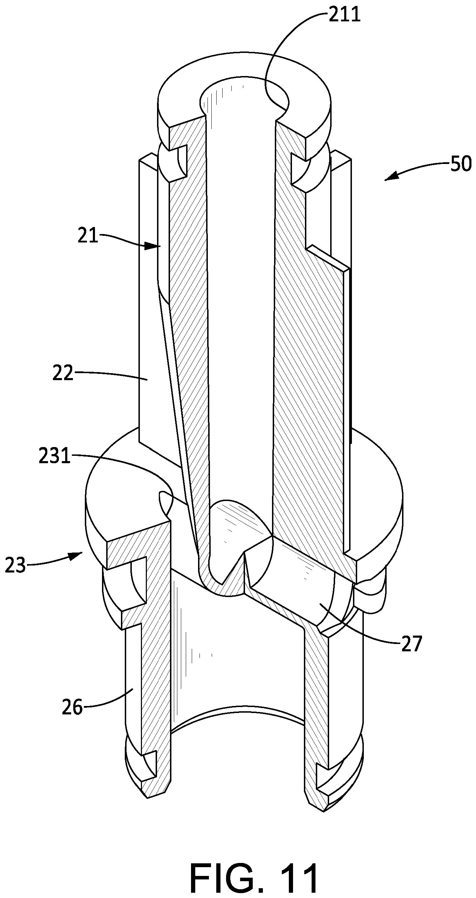

As another example, with reference to Figs. 5 to 7 and 11, in the second embodiment of the channel-separating structure, the channel-separating portion 20 comprises a bottom tube 26 and a guiding tube 27. The bottom tube 26 is mounted at a bottom portion of the connecting seat 23. The multiple through holes 231 of the connecting seat 23 fluidly communicate with the bottom tube 26, such that the peripheral channel 24 passes through the bottom tube 26. The guiding tube 27 is disposed inside the bottom tube 26 and fluidly communicates between the inner side of the central tube 21 and an outer side of the bottom tube 26. In this embodiment, to-be-filtrated water enters the central channel 211 of the central tube 21 and the guiding tube 27 to be fed into the filter core 30 from an outer side of the filter core 30. Water is filtrated by the filter core 30, and then passes the bottom tube 26 and the multiple through holes 231 of the connecting seat 23 to pass between the central tube 21 and the cooperating tube 11 to be discharged from the channel-separating structure through the peripheral channel 24.

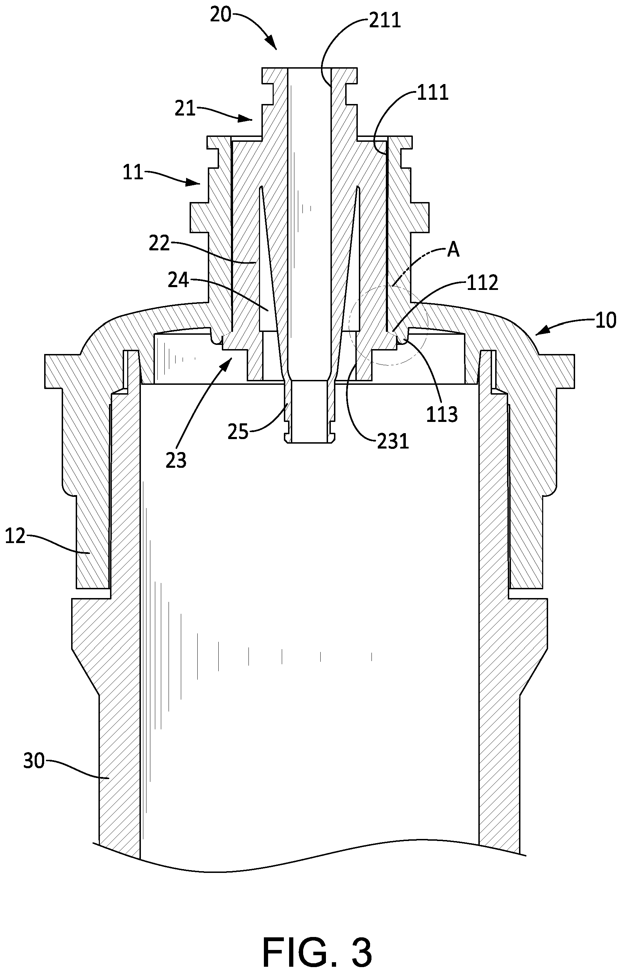

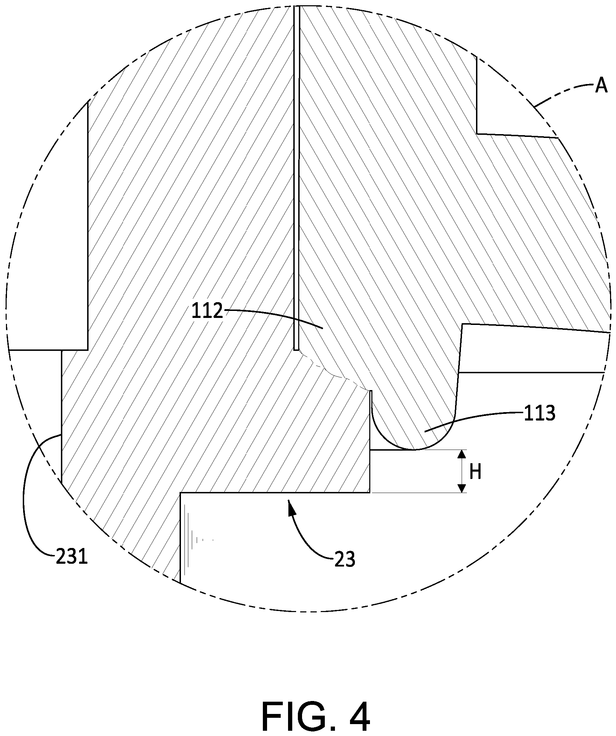

In addition, as shown in Figs. 3 and 4, the cooperating tube 11 comprises a positioning section 113. The positioning section 113 is disposed at an outer side of the connecting section 112 and surrounds the connecting seat 23 of the channel-separating portion 20. A distance step H is located between a bottom side of the connecting seat 23 and a bottom side of the positioning section 113.

A method for manufacturing a channel-separating structure in accordance with the present invention comprises steps as follows: providing a top cap 40, providing a channel-separating element 50, inserting the channel-separating element 50 into the top cap 40, and welding to connect the top cap 40 and the channel-separating element 50 to each other.

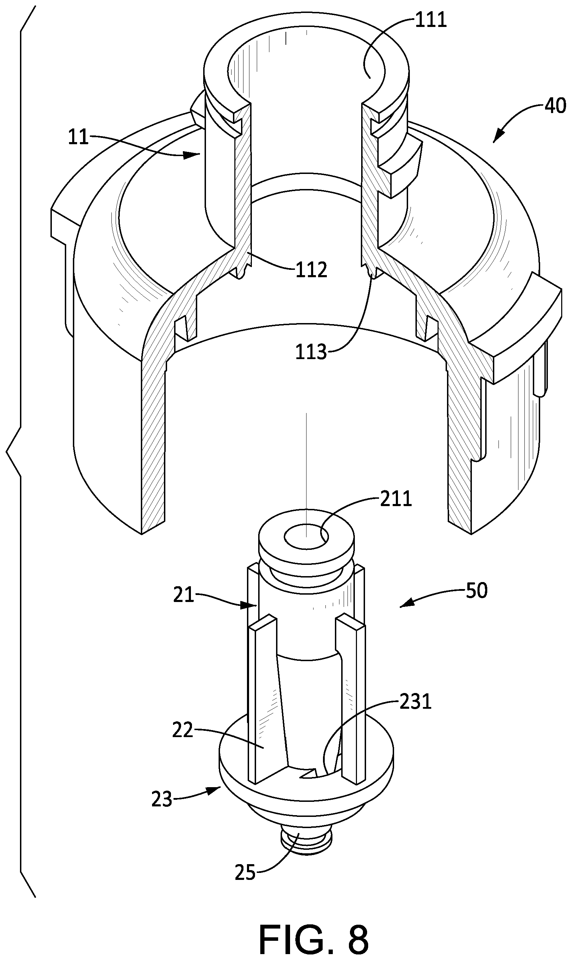

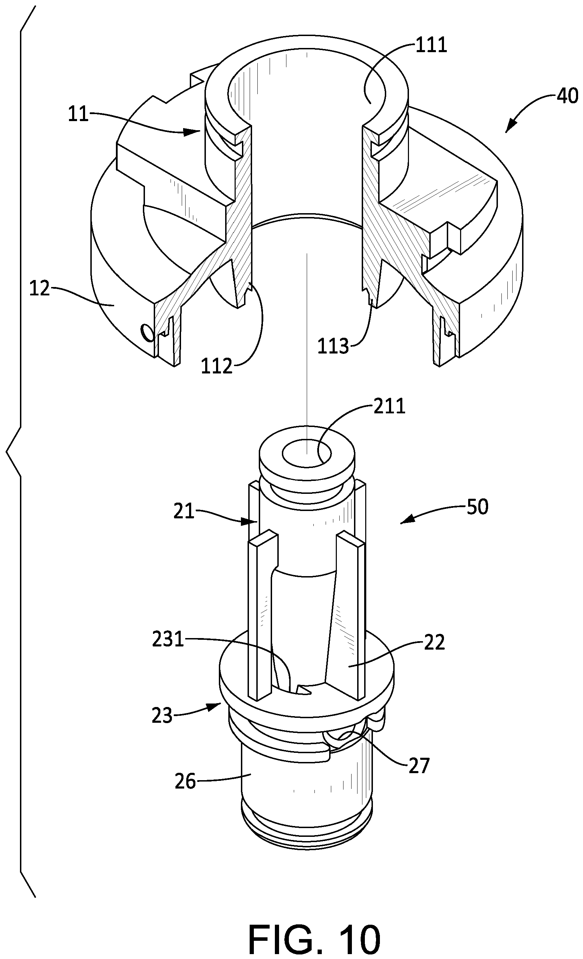

With reference to Figs. 8 and 10, the top cap 40 comprises the cooperating tube 11 and the assembling wall 12. The cooperating tube 11 comprises the cooperating hole 111 and the connecting section 112. The cooperating hole 111 is formed inside the cooperating tube 11 and is formed through the top cap 40 from top to bottom. The connecting section 112 is disposed at the bottom portion of the cooperating tube 11. The assembling wall 12 is annular, is connected to the cooperating tube 11, and is disposed at a bottom side of the top cap 40.

With reference to Figs. 8 to 11, the channel-separating element 50 comprises the central tube 21, the multiple ribs 22, and the connecting seat 23. The central channel 211 is formed inside the central tube 21. The multiple ribs 22 are disposed at the outer side of the central tube 21 and are connected to the connecting seat 23. The connecting seat 23 comprises multiple through holes 231 formed through the connecting seat 23 from top to bottom.

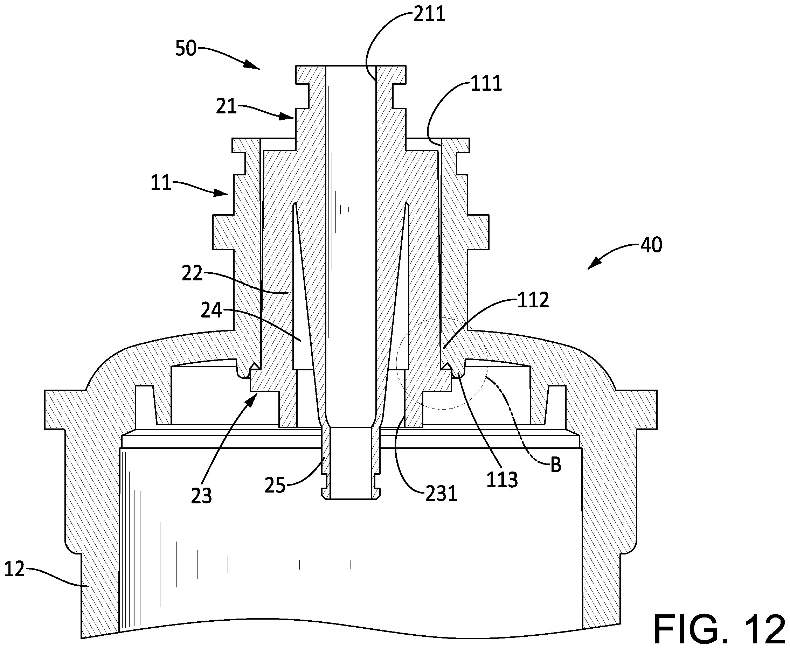

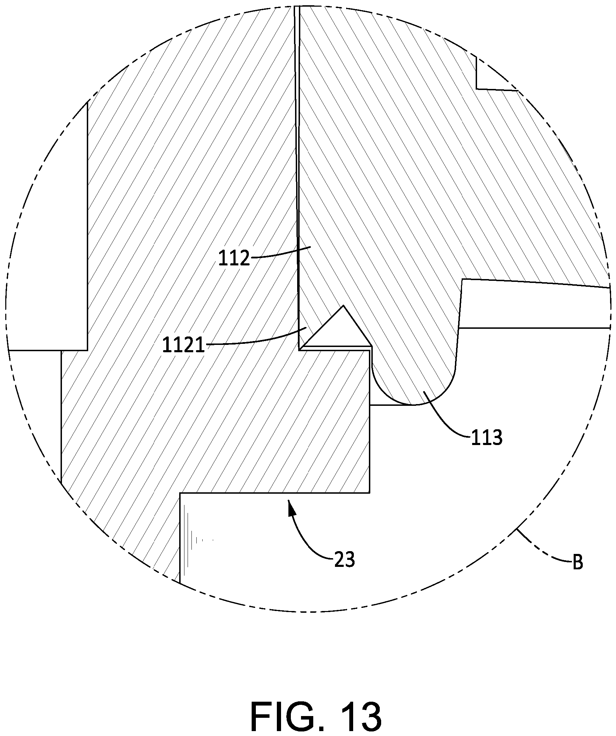

With reference to Figs. 12 and 13, the channel-separating element 50 is inserted into and assembled to the cooperating tube 11 of the top cap 40. The connecting seat 23 abuts against the connecting section 112 of the cooperating tube 11. The gap is formed and located between the external edge of each one of the multiple ribs 22 and the inner wall surrounding the cooperating hole 111.

With reference to Figs. 4 and 13, the connecting section 112 of the top cap 40 and the connecting seat 23 of the channel-separating element 50 are welded to connect the connecting section 112 and the connecting seat 23 to each other. Therefore, the top cap 40 and the channel-separating element 50 are bonded to manufacture the channel-separating structure.

In the method for manufacturing a channel-separating structure, the top cap 40 and the channel-separating element 50 are produced respectively before connected to each other through welding to manufacture the channel-separating structure. As shown in Figs. 8 and 10, the top cap 40 of the channel-separating structure can be produced according to a shape of a housing of the filter core 30 to which the top cap 40 is going to be assembled. The channel-separating element 50 of the channel-separating structure can be produced according to filtrating routes that materials of the filter core 30 require. Then, the top cap 40 and the channel-separating element 50 are welded to be connected to each other. Therefore, manufacture of the channel-separating structure does not need to consider the filtrating routes and the shape of the housing of the filter core 30 at the same time, thereby lowering manufacturing complexity and cutting costs.

Preferably, as shown in Figs. 12 and 13, the connecting section 112 of the top cap 40 comprises a connecting protrusion 1121. Before welding to connect the top cap 40 and the channel-separating element 50, the connecting seat 23 of the channel-separating element 50 abuts the connecting protrusion 1121. While being welding, the connecting protrusion 1121 is melted to be connected to the connecting seat 23.

Additionally, the connecting section 112 of the top cap 40 and the connecting seat 23 of the channel-separating element 50 can be connected to each other through friction welding, ultrasonic welding, high frequency welding, etc.

In addition, as shown in Figs. 12 and 13, when the channel-separating element 50 is assembled to the top cap 40, the positioning section 113 of the cooperating tube 11 of the top cap 40 can facilitate positioning the channel-separating element 50, increasing convenience of assembling. The channel-separating element 50 is limited in position through the positioning section 113, thereby ensuring welding accuracy.

As shown in Fig. 8, in the first embodiment of the channel-separating structure, a first configuration of the top cap 40 and a first configuration of the channel-separating element 50 are connected using the method. Besides, in the second embodiment of the channel-separating structure, a second configuration of the top cap 40 and a second configuration of the channel-separating element 50 are connected using the method. Considering different shapes of the housing of the filter core 30 and filtration routes, the first configuration of the top cap 40 and the second configuration of the channel-separating element 50 can be connected to each other through the method. Alternatively, the second configuration of the top cap 40 and the first configuration of the channel-separating element 50 can also be connected to each other through the method. Therefore, convenience of manufacturing is increased and the costs are lowered.

To sum up, the channel-separating structure is mounted at the top portion of filter core 30 and can provide different filtration routes according to different types of the filter core 30. Using the method for manufacturing a channel-separating structure, the top cap 40 and the channel-separating element 50 are produced respectively before connected to each other, thereby lowering manufacturing complexity and cutting the costs.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A channel-separating structure configured to be mounted on a top portion of a filter core (30) and **characterized in that** the channel-separating structure comprises
a top cap portion (10) comprising
a cooperating tube (11) comprising
a cooperating hole (111) disposed inside the cooperating tube (11) and formed through the top cap portion (10) from top to bottom; and
a connecting section (112) disposed at a bottom portion of the cooperating tube (11);
an assembling wall (12) connected to the cooperating tube (11), being annular, and disposed at a bottom side of the top cap portion (10); the channel-separating structure mounted to the filter core (30) through the assembling wall (12);
a channel-separating portion (20) disposed inside the cooperating hole (111) of the cooperating tube (11) and comprising
a central tube (21) mounted through the cooperating hole (111) of the cooperating tube (11) and comprising
a central channel (211) disposed inside the central tube (21);
a connecting seat (23) mounted at the outer side of the central tube (21), abutting and connected to the connecting section (112) of the cooperating tube (11); the connecting seat (23) comprising
multiple through holes (231) formed through the connecting seat (23) from top to bottom;
multiple ribs (22) disposed at an outer side of the central tube (21) and connected to the connecting seat (23); a gap located between an external edge of each one of the multiple ribs (22) and an inner wall surrounding the cooperating hole (111); and
a peripheral channel (24) formed between the central tube (21) and the cooperating tube (11) and fluidly communicating with the multiple through holes (231).

2. The channel-separating structure as claimed in claim 1, wherein
the channel-separating portion (20) comprises
a bottom tube (26) mounted at a bottom portion of the connecting seat (23);
a guiding tube (27) disposed inside the bottom tube (26) and fluidly communicating between an inner side of the central tube (21) and an outer side of the bottom tube (26);
the multiple through holes (231) of the connecting seat (23) fluidly communicate with the bottom tube (26), such that the peripheral channel (24) passes through the bottom tube (26).

3. The channel-separating structure as claimed in claim 1, wherein
the channel-separating portion (20) comprises
an extending tube (25) connected to a bottom portion of the central tube (21) and passing through the connecting seat (23); an inner side of the extending tube (25) fluidly communicating with an inner side of the central tube (21);
the peripheral channel (24) passes through an outer side of the extending tube (25).

4. The channel-separating structure as claimed in any one of claims 1 to 3, wherein the cooperating tube (11) comprises a positioning section (113) disposed at an outer side of the connecting section (112) and surrounding the connecting seat (23) of the channel-separating portion (20).

5. The channel-separating structure as claimed in claim 4, wherein a distance step (H) is located between a bottom side of the connecting seat (23) and a bottom side of the positioning section (113).

6. A method for manufacturing a channel-separating structure **characterized in that** the method comprises steps as follows:
providing a top cap (40) comprising
a cooperating tube (11) comprising
a cooperating hole (111) disposed inside the cooperating tube (11) and formed through the top cap (40) from top to bottom;
a connecting section (112) disposed at a bottom portion of the cooperating tube (11);
an assembling wall (12) connected to the cooperating tube (11), being annular, and disposed at a bottom side of the top cap (40);
providing a channel-separating element (50) comprising
a central tube (21) comprising
a central channel (211) inside the central tube (21);
a connecting seat (23) comprising
multiple through holes (231) formed through the connecting seat (23) from top to bottom;
multiple ribs (22) disposed at an outer side of the central tube (21) and connected to the connecting seat (23);
inserting the channel-separating element (50) into the cooperating tube (11) of the top cap (40); abutting the connecting seat (23) against the connecting section (112) of the cooperating tube (11); forming a gap between an external edge of each one of the multiple ribs (22) and an inner wall surrounding the cooperating hole (111); and
welding the connecting section (112) of the top cap (40) and the connecting seat (23) of the channel-separating element (50), such that the connecting section (112) and the connecting seat (23) are welded and bonded to connect the top cap (40) and the channel-separating element (50).

7. The method for manufacturing a channel-separating structure as claimed in claim 6, wherein
the connecting section (112) of the top cap (40) comprises a connecting protrusion (1121);
the connecting seat (23) of the channel-separating element (50) abuts the connecting protrusion (1121) before welding the connecting section (112) of the top cap (40) and the connecting seat (23) of the channel-separating element (50);
the connecting protrusion (1121) is melted to be connected to the connecting seat (23) while welding.

8. The method for manufacturing a channel-separating structure as claimed in claim 6, wherein the connecting section (112) of the top cap (40) and the connecting seat (23) of the channel-separating element (50) are connected through friction welding.

9. The method for manufacturing a channel-separating structure as claimed in claim 6, wherein the connecting section (112) of the top cap (40) and the connecting seat (23) of the channel-separating element (50) are connected through ultrasonic welding.

10. The method for manufacturing a channel-separating structure as claimed in claim 6, wherein the connecting section (112) of the top cap (40) and the connecting seat (23) of the channel-separating element (50) are connected through high frequency welding.
